Europäisches Patentamt

European Patent Office

Office européen des brevets

(11) Publication number: **0 255 226**
**A2**

# (12) EUROPEAN PATENT APPLICATION

(21) Application number: 87305567.7

(51) Int. Cl.⁴: **C09J 3/16**

(22) Date of filing: **23.06.87**

(30) Priority: **26.06.86 US 878816**

(43) Date of publication of application:
**03.02.88 Bulletin 88/05**

(84) Designated Contracting States:
**DE FR GB**

(71) Applicant: **MINNESOTA MINING AND MANUFACTURING COMPANY**
**3M Center, P.O. Box 33427**
**St. Paul, Minnesota 55133-3427(US)**

(72) Inventor: **Copley, Bruce C. c/o Minnesota Mining and**
**Manufacturing Company 2501 Hudson Road**
**P.O. Box 33427 St. Paul Minnesota 55133(US)**
Inventor: **Melancon, Kurt c/o Minnesota Mining and**
**Manufacturing Company 2501 Hudson Road**
**P.O. Box 33427 St. Paul Minnesota 55133(US)**

(74) Representative: **Baillie, Iain Cameron et al**
**c/o Ladas & Parry Isartorplatz 5**
**D-8000 München 2(DE)**

(54) **Silicone pressure-sensitive adhesive having improved properties.**

(57) Conventional silicone pressure-sensitive adhesives are a blend of high molecular weight silicone gum and MQ silicone resin. The improved adhesives of the present invention employ MQ resins having a comparatively narrow molecular weight range, thereby permitting the adhesives to be tailored to meet specific performance requirements.

EP 0 255 226 A2

## SILICONE PRESSURE-SENSITIVE ADHESIVE HAVING IMPROVED PROPERTIES

### Background of the Invention

This invention relates to normally tacky and pressure-sensitive adhesives (PSAs), more particularly silicone PSAs, and PSA tapes made therewith.

For over 30 years it has been recognized that normally tacky and pressure-sensitive adhesives could be prepared form a blend of high molecular weight polydimethylsiloxane gum and so-called "MQ" resin (cf. Chapter of Noll, "The Chemistry and Technology of Silicones," Academic Press, 1969), the resultant adhesive being somewhat analogous to the rubber-resin adhesives that have been in use for over half a century; cf. U.S. Pat. No. 2,736,721, the disclosure of which is incorporated herein by reference. In such compositions the MQ resin comprises (i) $R_3SiO_{0.5}$ units, wherein R is a monovalent hydrocarbon radical containing six or fewer carbon atoms, at least 95% being methyl, and (ii) $SiO_2$ units, the ratio of (i):(ii) being in the range of about 0.5 to 1.0; cf. U.S. Pat. No. 2,676,182, the disclosure of which is also incorporated herein by reference. As is the case with most resin systems, the molecular weight distribution of silicone resin follows a rather skewed curve, reflecting a polydispersity (ratio of number average to weight average molecular weight) of 2.2 or more, typically in the range of 3 to 6.

Gum:resin silicone PSAs perform a variety of useful functions, e.g., as the adhesive in tape products that are exposed to extremely high temperatures, employed in stringent electrical applications, used to mask electrical circuit boards before immersion in plating baths bonded to silicone film or silicone-coated paper, etc. here it is important for the resin:gum silicone PSA to have good shear properties, it is common to effect crosslinking, e.g., by including a heat-activatable peroxide, employing E-beam irradiation, etc.

In evaluating the performance of any PSA tape, it is common to subject it to tests measuring peel adhesion, "quick stick", and shear. Additional tests may be performed to evaluate other properties, e.g., the ability to adhere to silicone-coated release liners, where it is necessary to splice the end of a roll of one liner to the beginning of another roll. It is generally desirable to have peel adhesion, "quick stick", and shear values as high as can be obtained, although sometimes one property may be more important than another. Where the product is to be used to splice silicone liners, it is naturally desired to maximize adhesion to silicone surfaces. In the past, the only way of varying the adhesive properties of silicone PSAs has been to vary the resin:gum ratio, permitting only modest changes.

### Brief Summary of the Invention

The present invention provides, for the first time, it is believed, a means for predictably controlling specific performance properties of resin:gum silicone pressure-sensitive adhesives. In accordance with the invention, it is possible to obtain silicone PSAs that have peel adhesion, quick stick, or shear superior to the comparable property possessed by prior art silicone PSAs. On the other hand, it is also possible to obtain an adhesive having a balance of such properties superior to that obtainable by prior art silicone PSAs. Further, it is possible to prepare products of the invention that have the ability to bond firmly to silicone-coated release liners.

The desirable properties just discussed and the ability to vary the performance characteristics are premised on a simple modification of the conventional resin:gum silicone pressure-sensitive adhesive. Simply stated, the invention involves employing a silicone resin that has a narrow range of molecular weight as contrasted to conventional resins, which have a broad range of molecular weights. A narrow range can be obtained by fractionating a conventional resin or, it is believed, by directly preparing a resin in a manner such that it inherently possesses a narrow range of molecular weights.

The invention can be characterized as an improvement over the normally tacky and pressure-sensitive silicone adhesive, which is a blend of

(a) high molecular weight polydimethylsiloxane gum or poly(dimethyl-co-diphenyl)siloxane gum and

(b) MQ resin comprising

(i) $R_3SiO_{0.5}$ units wherein R is a monovalent hydrocarbon radical containing six or fewer carbon atoms, at least 95% being methyl, and

(ii) $SiO_2$ units,

the ratio of (i):(ii) being in the range of about 0.5 to 1.0. The improvement comprises the MQ resin's having a polydispersity value (ratio of weight average molecular weight to number average molecular weight) of no

more than about 2.0, whereby the resultant pressure-sensitive adhesive possesses adhesion properties superior to those of similar pressure-sensitive adhesives having a higher polydispersity value. Both the specific molecular weights of the resin and the polydispersity values can be varied to obtain specific performance properties.

## Detailed Description

In order to determine the number average molecular weight (Mn) and the weight average molecular weight (Mw), from which polydispersity is obtained as the quotient of Mw divided by Mn, it has been found convenient to dissolve 100 mg of dry resin in chloroform, filter, and inject 100 microliters of the solution into a system carrying out gel permeation chromatography under the following conditions:

Columns:     5 - 250 mm $^\times$ 7.7 mm Analytical Service Inc's "Ultragel" MX Linear GPC columns
Mobile Phase:    Chloroform
Flow Rate:    1.0 ml/min
Detector:    IBM LC9525 differential refractive index detector
Temperature:    32°C

The data are collected as area slices on a Hewlett-Packard HP-3388A integrator, using Hewlett Packard GPC REV 2048 software, and analyzed using a polystyrene-based standard curve and Hewlett-Packard GPC REV 2048 GPC (CALC-1M) software on the integrator. The data are not corrected to give actual molecular weights, but are based on the size of the narrow molecular weight distribution polystyrene standards. The calculation methods used by the software listed above are described in Kirkland, "Modern Size-Exclusion Liquid Chromatography" (9179), the disclosure of which is incorporated herein by reference. The greater the polydispersity, the greater the range of molecular weight present.

It has been found convenient to employ several more or less conventional tests to evaluate individual performance characteristics of the finished adhesive. In each case, a 38-micrometer biaxially oriented polyethylene terephthalate film backing was primed by knife coating with a 5% toluene solution of a polydimethyl polysiloxane gum (a release agent commercially available from General Electric as "SS-4191") and drying for 30 seconds at 135°C to leave a dried coating weight of 4 g/m². The primed surface was then knife-coated with a 40% solids toluene solution of the silicone pressure-sensitive adhesive to be tested, air dried 5 minutes at 25°C, and then heated 5 minutes at 150°C to evaporate the solvent and cure the adhesive. The tests will now be described briefly:

## Peel Adhesion.

At 22°C and 50% relative humidity, a strip of tape is adhered by its adhesive to a glass plate under the weight of one pass of a 2-kg hard rubber roller. The adhesion value is measured by attaching the free end of the tape to a scale and moving the glass plate away from the scale at a rate of 3.8 cm/sec. while peeling the tape at an angle of 180°. Force to effect removal is reported in g/cm width. A detailed description of this test is set forth in Test PSTC-1, "Test Methods for Pressure Sensitive Tapes" 8th Edition, Pressure Sensitive Tape Council (1985).

## Quick Stick Adhesion.

At 22°C and 50% relative humidity a strip of tape is positioned directly over a clean test panel, touched lightly thereto and pulled away at 90° at a rate of 30.5 cm per minutes, reporting the force required in g/cm width. A detailed explanation of 15 this test is found in Test PSTC-5; cf. the aforementioned "Test Methods for Pressure Sensitive Tapes".

Shear Adhesion.

At 22°C and 50% relative humidity, a strip of tape is adhered by its adhesive to a stainless steel plate with a free end of the tape extending beyond the plate, the adhesive contact area being 1.27 cm × 1.27 cm. The plate is then positioned 2° from the vertical to prevent peeling, and a one-kg mass is suspended from the free end. The time at which the mass falls is reported as the shear adhesion value. The test is discontinued if the tape has not failed after 1300 minutes.

Adhesion to Silicone Liner.

The uncoated face of each of three different silicone-coated paper release liners was adhered to the glass plate described in the peel adhesion test with a piece of double-coated tape. The silicone tape being tested was applied to the silicone-coated surface of the release liner, and the adhesion was then measured as described in the peel adhesion test.

Three different silicone release liners were utilized as test surfaces. Liner No. 1 was a liner purchased from Akrosil, having the product designation "Silox" 3F/2B. Liner No. 2 was a clay-coated paper to which had been applied General Electric SS-4191 release coating. Liner No. 3 was a silicone-coated paper obtained from H.P. Smith having the product designation "Polyslick" S-8002. These three liners differ in the type of paper which is coated and therefore in the roughness. They also represent variations in the type and weight of silicone release coating.

## Detailed Description

A commercially available MQ silicone resin was obtained from General Electric as a 60% solids solution in toluene, having the product designation "GE-545". The solvent was removed in a rotary evaporator under reduced pressure at a temperature range of 30-90°C. The resin powder remaining after solvent evaporation was then divided into eleven fractions of unequal weight, by supercritical fluid (carbon dioxide) fractionation, using the method as described in Yilgor, I. and McGrath, J.E., Polymer Bulletin, 12, pp. 491-506 (1984). Fraction 11 was discarded because of the very small quantity, but the remaining ten fractions were subjected to gel permeation chromatography to determine their molecular weights and polydispersity. Results are tabulated below, commercial MQ resin GE-545 being included for comparison.

4

**TABLE I**

| Resin Fraction | Weight % of Resin in Fraction | Mn | Mw | Mz | Mw/Mn | Mz/Mn | Mz/Mw |
|---|---|---|---|---|---|---|---|
| 1 | 5.31 | 1060 | 1160 | 1430 | 1.09 | 1.35 | 1.23 |
| 2 | 9.99 | 1190 | 1330 | 1600 | 1.12 | 1.34 | 1.20 |
| 3 | 8.68 | 1280 | 1460 | 1870 | 1.14 | 1.46 | 1.28 |
| 4 | 5.96 | 1380 | 1570 | 1870 | 1.14 | 1.36 | 1.19 |
| 5 | 9.80 | 1580 | 2380 | 2380 | 1.18 | 1.51 | 1.28 |
| 6 | 9.11 | 2140 | 2980 | 4730 | 1.39 | 2.21 | 1.59 |
| 7 | 8.99 | 2860 | 4910 | 10650 | 1.72 | 3.72 | 2.17 |
| 8 | 14.80 | 3400 | 6500 | 14600 | 1.93 | 4.29 | 2.23 |
| 9 | 17.89 | 3870 | 7310 | 15800 | 1.89 | 4.08 | 2.16 |
| 10 | 9.19 | 6640 | 11100 | 19800 | 1.67 | 2.98 | 1.78 |
| 11 | 0.27 | — | — | — | — | — | — |
| Total | 100.00 | | | | | | |
| "GE-545" | | 1620 | 3620 | 10510 | 2.24 | 6.49 | 2.90 |

Adhesives were prepared by blending resin fractions 3-10, as well as prior art GE-545 resin, with a high molecular weight silicone gum (Dow Corning 7153) in three different resin:gum ratios. In each case the resin and gum were dissolved in toluene to make a 40% solids solution, to which was added 0.15% of tetramethylguanidine hexanoate to increase the silanol condensation reaction between the resin and gum. The solution was allowed to stand 24 hours at room temperature, after which 2% benzoyl peroxide was added. The adhesive solution was applied to 38-micrometer polyester film backing at a coating weight of 42 g/m², air dried at ambient conditions for 5 minutes, and then placed in a 150°C oven for 5 minutes to complete the peroxide cure. The following performance data were obtained.

**TABLE II**

| Resin:Gum Ratio | Peel Adhesion, N/cm | | | Quick Stick, N/cm | | | Shear, Minutes | | |
|---|---|---|---|---|---|---|---|---|---|
| | 43/57 | 50/50 | 56/44 | 43/57 | 50/50 | 56/44 | 43/57 | 50/50 | 56/44 |
| Resin Fraction # | | | | | | | | | |
| 3 | 1.53 | 2.4 | 2.96 | 1.49 | 2.06 | 2.75 | 1.1 | 2.9 | 8.0 |
| 4 | 1.97 | 2.96 | 4.38 | 1.42 | 2.04 | 2.87 | 3.0 | 3.5 | 90 |
| 5 | 2.52 | 3.50 | 6.13 | 1.41 | 2.29 | 3.34 | 16 | 34 | 638 |
| 6 | 4.26 | 5.69 | 6.57 | 1.97 | 3.36 | 4.89 | 330 | 1173 | 1300+ |
| 7 | 4.27 | 5.69 | 6.79 | 1.43 | 3.52 | 3.76 | 1300+ | 1300+ | 1300+ |
| 8 | 4.38 | 5.69 | 6.13 | 2.42 | 3.69 | 2.61 | 1300+ | 1300+ | 1300+ |
| 9 | 4.60 | 5.75 | R* | 2.25 | 3.47 | 0.11 | 1300+ | 1300+ | 1300+ |
| 10 | 3.39 | 2.85 | R* | 1.55 | 3.45 | 0 | 1300+ | 1300+ | 1300+ |
| "GE-545" | 3.17 | 4.60 | 5.69 | 1.50 | 2.83 | 3.63 | 182 | 460 | 1300+ |

* Raspy — considered unsatisfactory

The adhesion to the three different silicone release liners was evaluated by a procedure in which the tape is rolled down onto the liner with a 1.8-kg rubber roller and then peeled off at a 180° angle at a rate of 229 cm/min. The data obtained from this procedure are reported below.

### TABLE III
### Adhesion to Silicone Liners, N/cm

| Resin:Gum Ratio | Liner #1 | | | Liner #2 | | | Liner #3 | | |
|---|---|---|---|---|---|---|---|---|---|
| Resin Fraction | 43/57 | 50/50 | 56/44 | 43/57 | 50/50 | 56/44 | 43/57 | 50/50 | 56/44 |
| 3 | 0.65 | 0.99 | 1.53 | 0.44 | 1.09 | 1.75 | 0.44 | 1.20 | 1.86 |
| 4 | 0.55 | 1.31 | 2.41 | 0.77 | 1.64 | 2.96 | 0.77 | 1.86 | 3.72 |
| 5 | 0.99 | 2.08 | 3.94 | 1.09 | 3.17 | 5.03 | 1.31 | 3.28 | 4.82 |
| 6 | 2.85 | 3.06 | 0.11 | 4.27 | 4.38 | 0.44 | 3.61 | 4.81 | 0.44 |
| 7 | 2.63 | 0.22 | 0 | 3.06 | 1.31 | 0.11 | 3.50 | 1.97 | 0.11 |
| 8 | 0.77 | 0.11 | 0 | 1.20 | 0.11 | 0 | 0.99 | 0.11 | 0 |
| 9 | 0.22 | 0 | 0 | 0.66 | 0.11 | 0 | 0.33 | 0.11 | 0 |
| 10 | 0.11 | 0 | 0 | 0.11 | 0 | 0 | 0.11 | 0 | 0 |
| GE-545 | 0.99 | 1.97 | 0.22 | 1.97 | 1.42 | 0.77 | 2.19 | 3.06 | 0.44 |
| DC-7155 | 1.09 | 0.22 | 0.1 | 1.31 | 0.44 | 0.33 | 1.86 | 0.66 | 0.22 |

Overall, significantly higher adhesion to all three types of silicone liner was achieved with the resins of this invention. These results again show the superior balance of properties afforded by replacing the prior art resins with the narrower molecular weight resins, in accordance with the present invention.

From the foregoing data, it will be observed that where the MQ resin has a polydispersity value of no more than about 2.0, performance is noticeably better in one or more characteristics than is a conventional silicone adhesive in which the resin is a polymer having a normal molecular weight distribution, which yields a polydispersity value greater than 2.0. It will also be observed that, where a balance of properties is desired, those compositions employing a silicone resin whose $M_n$ is in the approximate range of 1,500 to 3,500 and whose polydispersity is in the approximate range of 1.2-1.9, the resin:gum ratio not exceeding 1:1 when the molecular weight of the resin is greater than about 2,000, the resultant product has excellent peel adhesion, quick stick, and shear adhesion, all superior to results obtained using a conventional resin:gum PSA.

It will also be observed from the tabulated data that, where $M_n$ is in the approximate range of 1,500 - 3,000, polydispersity being in the range of 1.1 - 1.4, the adhesive adheres well to silicone-coated release liners, displaying values consistently and noticeably higher than those obtained using conventional resins in the same formulation.

In further versions of the invention, it has been found effective to use varying ratios of two or more different resin fractions. Thus, in the data tabulated below, varying amounts of resin fraction 4 and resin fraction 7 were blended, in each case a total resin:gum ratio of 1:1 being employed. Data are tabulated below:

## TABLE IV

| Resin Fraction 4: Resin Fraction 7 | Adhesion to Glass, N/cm | Quick Stick, N/cm | Shear Minutes | Peel Adhesion to Silicone Release Liner #1, N/cm |
|---|---|---|---|---|
| 0:100 | 5.69 | 3.54 | 1300+ | 0.22 |
| 20:80 | 5.25 | 2.70 | 1300+ | 1.31 |
| 40:60 | 4.82 | 2.35 | 592 | 2.63 |
| 60:40 | 3.72 | 2.07 | 109 | 2.52 |
| 80:20 | 3.50 | 2.07 | 47 | 1.75 |
| 100:0 | 2.96 | 2.04 | 3.5 | 1.31 |

Although the individual values obtained by blending resins were not so high as those obtained using individual resin fractions, it will be noted that the 40:60 blend had a range of properties that made it generally satisfactory (and superior to conventional adhesives) for all-around use.

It has also been found that the performance of resin:gum PSAs employing a·conventional resin can be improved by adding one or more fractions of the type disclosed earlier. As might be expected, however, performance is not equal to that obtained from compositions in which no resin having a conventional molecular weight distribution is included.

Previously described MQ resin fractions 3-10 were blended with a poly(dimethyl-co-diphenyl)siloxane gum containing about 13 mol% diphenylsiloxane units (commercially available from General ELectric as GE525B), using the same procedure as was employed with the silicone gum, to obtain PSA solutions. These solutions were then coated on polyester film, dried, cured, and tested in the manner previously described. Results are tabulated below:

**TABLE V**

| Resin:Gum Ratio | Peel Adhesion, N/cm | | | Quick Stick, N/cm | | | Shear, Minutes | | |
|---|---|---|---|---|---|---|---|---|---|
| | 43/57 | 50/50 | 56/44 | 43/57 | 50/50 | 56/44 | 43/57 | 50/50 | 56/44 |
| Resin Fraction # | | | | | | | | | |
| 3 | 2.62 | 3.82 | 5.01 | 1.28 | 2.07 | 2.75 | 0.7 | 0.8 | 0.5 |
| 4 | 3.05 | – | – | 2.25 | – | – | 1.5 | – | – |
| 5 | 4.58 | 4.91 | 6.76 | 2.47 | 2.92 | 4.42 | 2.6 | 9.5 | 12.0 |
| 6 | 5.23 | 5.67 | R* | 3.13 | 3.86 | 1.60 | 44.6 | 251 | 984 |
| 7 | 6.10 | R* | R* | 3.05 | 2.59 | 1.52 | 244 | 1300+ | 1300+ |
| 8 | R* | R* | R* | 3.07 | 2.46 | 0 | 782 | 1300+ | 1300+ |
| 9 | R* | R* | R* | 2.47 | 0 | 0 | 1300+ | 1300+ | 1300+ |
| 10 | R* | R* | R* | 1.16 | 0 | 0 | 1300+ | 1300+ | 1300+ |
| GE-545 | 4.03 | 5.89 | R* | 1.95 | 3.39 | 2.74 | 20.6 | 108 | 344 |

*Raspy – considered unsatisfactory

## Claims

1. A normally tacky and pressure-sensitive adhesive that is a blend of

(a) high molecular weight polydimethylsiloxane gum or poly(dimethyl-co-diphenyl)siloxane gum and

(b) MQ resin comprising

(i) $R_3SiO_{0.5}$ units, wherein R is a monovalent hydrocarbon radical containing 6 or fewer carbon atoms, at least 95% being methyl,

(ii) $SiO_2$ units, the ratio of (i):(ii) being in the range of about 0.5 to 1.0,

characterized in that the MQ resin has a polydispersity value of no more than 2.0, whereby the resultant pressure-sensitive adhesive possesses adhesion properties superior to those of similar pressure-sensitive adhesives containing MQ resins that have a polydispersity value greater than 2.0.

2. The pressure-sensitive adhesive of claim 1 further characterized in that the resin has a number average molecular weight in the approximate range of 1,250 to 3,750.

3. The pressure-sensitive adhesive of claim 2 further characterized in that it additionally contains an effective amount of an activatable crosslinking agent.

4. The pressure-sensitive adhesive of claim 2 further characterized in that the number average molecular weight of the MQ resin is in the approximate range of 1,500 to 3,000, the polydispersity being in the range of 1.1 and 1.4, whereby said adhesive adheres well to silicone-coated release liners.

5. The pressure-sensitive adhesive of claim 2 further characterized in that the number average molecular weight is in the approximate range of 1,500 to 3,500 and the polydispersity is in the approximate range of 1.2 to 1.9, the resin:gum ratio not exceeding 1:1 when the molecular weight is greater than about 2,000, whereby said adhesive has excellent adhesion to glass, quick stick adhesion to glass, and shear adhesion to steel.

6. A normally tacky and pressure-sensitive adhesive tape comprising a sheet backing to at least one major face is firmly adherently bonded an adhesive characterized in that it is the adhesive of any preceding claim.

7. The tape of claim 6 further characterized in that the adhesive is crosslinked.